# EUROPÄISCHE PATENTSCHRIFT

(11) **EP 2 188 170 B1**
(45) Veröffentlichungstag und Bekanntmachung des Hinweises auf die Patenterteilung: **10.08.2011**
(21) Anmeldenummer: 08785721.5
(22) Anmeldetag: 27.08.2008
(51) Int. Cl.: B62K 25/08

(54) **UNTERBEIN FÜR EINE FEDERGABEL**
LOWER LEG FOR A SUSPENSION FORK
PARTIE INFERIEURE DE BRANCHE POUR FOURCHE A SUSPENSION

(30) Priorität: 29.08.2007 DE 102007040887
(43) Veröffentlichungstag der Anmeldung: 26.05.2010
(73) Patentinhaber: Gustav Magenwirth GmbH & Co. KG, 72574 Bad Urach (DE)
(72) Erfinder: LÜDE, Dirk, 80798 München (DE); KÜNSTLE, Reiner, 72555 Metzingen (DE)
(74) Vertreter: Friese, Martin
(86) Internationale Anmeldenummer: PCT/EP2008/007020
(87) Internationale Veröffentlichungsnummer: WO 2009/030412

(56) Entgegenhaltungen:
- DE-A1- 19 531 844
- DE-U1- 29 615 349

## Beschreibung

Die Erfindung betrifft ein Unterbein für eine Federgabel gemäß dem Oberbegriff von Anspruch 1 und eine Federgabel mit einem derartigen Unterbein.

Eine "Federgabel" bedeutet im Zusammenhang mit der vorliegenden Beschreibung und den vorliegenden Ansprüchen eine Fahrradgabel oder Motorradgabel, die zwei Tauchrohre aufweist, in die jeweils ein Standrohr federnd aufgenommen ist. Die Ausfallenden der Tauchrohre weisen eine Einrichtung zur Aufnahme der Achse eines Rades auf (normalerweise des Vorderrades, wobei aber bei unkonventionellen Rahmen auch eine Aufnahme des Hinterrades denkbar ist). Die Standrohre sind in den Tauchrohren verschiebbar gelagert, wobei eine Federung und Dämpfung vorgesehen ist, um beim Fahren auftretende Stöße abzufangen bzw. zu dämpfen. Je nach Fahrsituation kann die Federung bzw. Dämpfung verstellbar bzw. abschaltbar bzw. zuschaltbar sein.

Ein "Unterbein" bedeutet im Zusammenhang mit der vorliegenden Beschreibung und den vorliegenden Ansprüchen die untere Baugruppe der Federgabel, die im Wesentlichen die beiden Tauchrohre umfasst. Die beiden Tauchrohre sind über einen oder mehrere Stabilisatoren verbunden, um eine gewisse Verwindungssteifigkeit des Unterbeins gegenüber der beim Fahren und insbesondere beim Einfedern, Kurvenfahren, Landen, bzw. Springen auftretenden Torsionskräfte und Biegekräfte zu erreichen. Die Stabilisatoren verbinden in der Regel die oberen Enden der Tauchrohre. An den anderen Enden der Tauchrohre sind jeweils Ausfallenden vorgesehen, welche jeweils eine Aufnahme für die Achse des Rads aufweisen.

Ein Unterbein für eine Federgabel gemäß dem Oberbegriff von Anspruch 1 ist aus der DE 195 31 844 A1 bekannt. Das Unterbein weist zwei Tauchrohre mit jeweils einem Ausfallende auf. Bei diesem bekannten Unterbein für eine Federgabel sind zwei Stabilisatoren (Gabelbrücken 7) vorgesehen, die die beiden Tauchrohre starr miteinander verbinden. Dazu weisen die beiden Tauchrohre an ihren jeweils oberen Enden jeweils einen Rohrfortsatz auf, über den die beiden Stabilisatoren fest miteinander verbunden sind. Diese Rohrfortsätze werden auf die Tauchrohre aufgesteckt und fest mit diesen verbunden. Bei dem bekannten Unterbein wird durch das Vorsehen der beiden Stabilisatoren eine gewisse Verwindungssteifigkeit erreicht.

Es besteht bei dem bekannten Unterbein aber der Nachteil, dass an den Übergangsbereichen von den Stabilisatoren zu den Rohrfortsätzen Spannungsspitzen auftreten, die zu einer hohen Belastung führen. Daher müssen die Übergangsbereiche sehr stabil und somit schwer ausgebildet werden, um einem Spannungsbruch zu vermeiden. Bei extremen Fahrsituationen kann es überdies zu einer Beschädigung des Unterbeins kommen.

Der Erfindung liegt daher die Aufgabe zugrunde, ein Unterbein für eine Federgabel gemäß dem Oberbegriff von Anspruch 1 anzugeben, bei dem trotz eines gewichtsarmen Aufbaus die beim Fahren auftretenden Spannungsspitzen im Vergleich zum Stand der Technik relativ klein sind.

Die Aufgabe der Erfindung wird mit einem Unterbein für eine Federgabel gemäß den Merkmalen von Anspruch 1 gelöst. Vorteilhafte Ausgestaltungen der Erfindung sind in den abhängigen Ansprüchen angegeben.

Gemäß einer Ausführung der Erfindung wird ein Unterbein für eine Federgabel mit zwei Tauchrohren mit jeweils einer Aufnahmeeinrichtung zur Aufnahme eines in der Aufnahmeeinrichtung verschiebbar gelagerten Standrohrs und mit zwei Stabilisatoren angegeben, die den Ausfallenden der Tauchrohre gegenüberliegende Endbereiche der beiden Tauchrohre miteinander verbinden, wobei das Unterbein eine Versteifungseinrichtung aufweist, die die beiden Stabilisatoren miteinander verbindet.

Bei Ausführungen, die mehr als zwei Stabilisatoren aufweisen, sollten erfindungsgemäß zumindest zwei der Stabilisatoren miteinander verbunden sein. Erfindungsgemäß sind bei mehr als zwei Stabilisatoren Versteifungseinrichtungen vorgesehen, die zumindest jeweils zwei Stabilisatoren miteinander verbinden und vorzugsweise gemäß den unten genannten vorteilhaften Weiterbildungen ausgebildet sind.

Gemäß dem Stand der Technik sind die beiden Stabilisatoren nur über die Tauchrohre an ihren Enden starr miteinander verbunden. Durch die erfindungsgemäße Versteifungseinrichtung wird eine zusätzliche Festigkeit und/oder Steifigkeit erreicht. Die Versteifungseinrichtung kann dabei vorzugsweise auch mit den oberen Enden der beiden Tauchrohre verbunden sein. Alternativ kann die Versteifungseinrichtung nur mit den beiden Stabilisatoren verbunden sein. In diesem Fall ist es bevorzugt, dass die beiden Stabilisatoren nicht mit einer scharfen Kante, sondern mit einem Radius mit den beiden Tauchrohren verbunden sind. Der Radius sollte zumindest ungefähr 3mm und vorzugsweise zumindest ungefähr 5 mm betragen.

Im Prinzip kann das erfindungsgemäße Unterbein der Federgabel auf einer oder beiden Seiten des darin anzuordnenden Rads auch mehr als ein Tauchrohr aufweisen, in das jeweils ein Standrohr der Federgabel verschiebbar aufgenommen wird. Ein derartiges Unterbein soll ebenfalls von dem Schutzumfang der Erfindung umfasst sein, wenn eine erfindungsgemäße Versteifungseinrichtung vorgesehen ist.

Erfindungsgemäß weist die Versteifungseinrichtung ein oder mehrere Verbindungselemente auf, die die beiden Stabilisatoren oberhalb der Tauchrohre miteinander verbinden. Erfindungsgemäß kann die Versteifungseinrichtung zumindest zwei Verbindungselemente aufweisen, die jeweils ein Ende des einen Stabilisators mit einem Ende des anderen Stabilisators verbinden und bezogen auf das Unterbein innerhalb der Aufnahmeinrichtungen für die Standrohre verlaufen.

Erfindungsgemäß können die Verbindungselemente der Versteifungseinrichtung Stege und/oder Drähte umfassen.

Die Stege und/oder Drähte können erfindungsgemäß auch in Form eines Gitters und/oder Fachwerks angeordnet sein, wobei die Anordnung vorzugsweise derart ist, dass die beim Fahren auftretenden Spannungen möglichst entlang der Stege und/oder Drähte verlaufen. Bei den Ausführungen mit Stegen, können die zwischen den Stegen bestehenden Lücken freigelassen und/oder durch dünne Flächen aufgefüllt werden. Die dünnen Flächen sind dabei vorzugsweise derart angeordnet, dass die Flächen außen angeordnet sind. Aus optischen oder anderen Gründen können sie jedoch auch innen oder in der Mitte angeordnet sein.

Erfindungsgemäß können die Verbindungselemente der Versteifungseinrichtung Stege umfassen, die mit den beiden Stabilisatoren und jeweils einem Tauchrohr verbunden sind.

Diese Ausführungen haben den Vorteil, dass das Verbindungselement besonders leicht bauend ausgeführt werden kann. Vorzugsweise kann dabei das Verbindungselement entlang seines gesamten Verlaufs mit dem oberen Ende eines Tauchrohres verbunden sein.

Erfindungsgemäß können die Verbindungselemente der Versteifungseinrichtung Stege umfassen, die eine kleinste Höhe von zumindest ungefähr 0,5 mm, vorzugsweise von zumindest mindestens ungefähr 1 mm, weiter vorzugsweise von zumindest ungefähr 2 mm, weiter vorzugsweise von zumindest ungefähr 3 mm, weiter vorzugsweise von zumindest ungefähr 5 mm und bevorzugt von ungefähr zumindest ungefähr 10 mm aufweisen.

Erfindungsgemäß können die Verbindungselemente der Versteifungseinrichtung Stege umfassen, die eine kleinste Höhe von weniger als ungefähr 50 mm, vorzugsweise von weniger als ungefähr 40 mm, weiter vorzugsweise von weniger als ungefähr 30 mm, weiter vorzugsweise von weniger als ungefähr 20 mm und bevorzugt von ungefähr weniger als ungefähr 15 mm aufweisen.

Erfindungsgemäß können die Verbindungselemente der Versteifungseinrichtung Stege umfassen, die dünnere und dickere Bereiche umfassen, wobei die dickeren Bereiche vorzugsweise in Bereichen der Stege vorgesehen sind, in denen beim Fahren größere Spannungen bzw. Belastungen auftreten und die dünneren Bereiche vorzugsweise in Bereichen der Stege vorgesehen sind, in denen beim Fahren kleinere Spannungen bzw. Belastungen auftreten.

Erfindungsgemäß kann die Breite bzw. Stärke der Verbindungselemente der Versteifungseinrichtung und/oder die Breite bzw. Stärke der dickeren Bereiche der Verbindungselemente der Versteifungseinrichtung zumindest ungefähr 0,5 mm, vorzugsweise zumindest mindestens ungefähr 1 mm, weiter vorzugsweise zumindest ungefähr 2 mm, und bevorzugt ungefähr 3 mm betragen.

Erfindungsgemäß kann die Breite bzw. Stärke der Verbindungselemente der Versteifungseinrichtung und/oder die Breite bzw. Stärke der dickeren Bereiche der Verbindungselemente der Versteifungseinrichtung weniger als ungefähr 10 mm, vorzugsweise von weniger als ungefähr 8 mm, weiter vorzugsweise weniger als ungefähr 6 mm, weiter vorzugsweise weniger als ungefähr 5 mm, weiter vorzugsweise weniger als ungefähr 4 mm, und bevorzugt ungefähr 3 mm betragen.

Erfindungsgemäß können die Verbindungselemente der Versteifungseinrichtung Stege umfassen, die Aussparungen, Durchbrüche und/oder dünne flächige Bereiche sowie Rippen und/oder Streben umfassen, wobei die Rippen und/oder Streben vorzugsweise in Bereichen der Stege vorgesehen sind, in denen beim Fahren größere Spannungen bzw. Belastungen auftreten und die Aussparungen, Durchbrüche und/oder dünnen flächigen Bereiche vorzugsweise in Bereichen der Stege vorgesehen sind, in denen beim Fahren kleinere Spannungen bzw. Belastungen auftreten.

Erfindungsgemäß können die Verbindungselemente der Versteifungseinrichtung Rippen umfassen, die vorzugsweise entlang der Ränder der Verbindungselemente verlaufen.

Erfindungsgemäß kann das Unterbein aus einem Druckgussmaterial und/oder einem Kunststoffmaterial ausgebildet sein, wobei das Druckgussmaterial vorzugsweise Aluminiumdruckguss- und/oder Magnesiumdruckgussmaterial umfasst, und wobei das Kunststoffmaterial faserverstärkten Kunststoff und/oder Carbon umfasst. Dabei können die Fasern des faserverstärkten Kunststoffes vorzugsweise Kohlefasern, Glasfasern und/oder Kunststofffasern umfassen. Weiter vorzugsweise kann die Richtung der Fasern im Wesentlichen unidirektional sein, wobei die Fasern vorzugsweise entlang der wirkenden Spannungen bzw. Kräfte ausgerichtet sind. Die bevorzugte Ausrichtung der Fasern hat den Vorteil, dass die auftretenden Spannungen bzw. Kräfte besser aufgenommen und unter Bildung möglichst geringer Verwindungen weitergeleitet werden können.

Erfindungsgemäß kann die Versteifungseinrichtung die beiden Stabilisatoren im Wesentlichen in der Mitte zwischen den beiden Tauchrohren miteinander verbinden. Die Stabilisatoren sind in der Regel und vorzugsweise mittig zu den beiden Tauchrohren angeordnet. Daher kann man gemäß dieser Ausführung der Erfindung mit anderen Worten auch sagen, dass das Verbindungselement der Versteifungseinrichtung die Mitten der beiden Stabilisatoren miteinander verbindet. Vorzugsweise kann das durch einen Steg geschehen, der gemäß einer Ausführung der Erfindung auch etwas bogenförmig ausgebildet sein kann, um der einfedernden Gabelbrücke Platz zum Einfedern zu bieten. Alternativ kann die Versteifungseinrichtung auch als Draht ausgebildet sein. In diesem Fall wirkt die Versteifungseinrichtung nur betreffend von Zugkräften, d.h. Kräften, die die beiden Stabilisatoren voneinander entfernen würden.

Erfindungsgemäß kann die Versteifungseinrichtung die beiden Stabilisatoren im Wesentlichen an den seitlichen Enden der Stabilisatoren miteinander verbinden.

Erfindungsgemäß können die Stabilisatoren Verbindungsbrücken umfassen, die die Tauchrohre im Wesentlichen jeweils vor bzw. hinter den Aufnahmeeinrichtungen miteinander verbinden.

Erfindungsgemäß kann das Unterbein zumindest eine Aufnahmeeinrichtung zur Aufnahme einer Betätigungsleitung für einen Verstellmechanismus bzw. eine Bremsvorrichtung aufweisen. Der Verstellmechanismus kann beispielsweise die Feder- bzw. Dämpfungscharakteristik der Federgabel beeinflussen. Der Eingang kann beispielsweise an dem Ausfallende eines oder beider Tauchrohre vorgesehen sein. In diesem Fall ist es vorteilhaft, die Aufnahmeeinrichtung für die Betätigungsleitung (beispielsweise einen Seilzug und/oder eine Druckleitung (Hydraulik oder Gas)) an dem Unterbein vorzusehen, weil ein fester Abstand von der Aufnahme bis zum Eingang besteht.

Die Bremsvorrichtung kann dabei beispielsweise eine an einem Ausfallende eines Tauchrohres angeordnete Bremszange einer Scheibenbremse umfassen. Der Anbau an dem Unterbein hat den Vorteil, dass der Abstand zwischen Aufnahmeeinrichtung und Bremseinrichtung fest ist und somit keine Leitungsreserve für die Betätigungsleitung vorgesehen werden muss. Erfindungsgemäß kann dabei die Aufnahmeinrichtung vorzugsweise an der Versteifungseinrichtung angeordnet sein. Die Aufnahmevorrichtung ist gemäß dieser Ausführung der Erfindung somit oberhalb der beiden Tauchrohre, so dass die Betätigungsleitung versteckt verlegt werden kann. Alternativ oder zusätzlich kann dabei die Aufnahmeinrichtung an einem der Tauchrohre angeordnet sein. Selbstverständlich können auch mehrere Aufnahmevorrichtungen vorgesehen sein.

Die Erfindung wird im Folgenden anhand der in den Figuren gezeigten Ausführungsbeispiele näher beschrieben.
- Fig. 1: zeigt eine perspektivische Ansicht eines Unterbeins gemäß einer ersten Ausführung der Erfindung von vorne oben links.
- Fig. 2: zeigt eine Seitenansicht des Unterbeins von Fig. 1.
- Fig. 3: zeigt eine Vorderansicht des Unterbeins von Fig. 1.
- Fig. 4: zeigt eine perspektivische Ansicht des Unterbeins von Fig. 1 von hinten oben links.
- Fig. 5: zeigt eine Seitenansicht einer Federgabel mit dem Unterbein von Fig. 1.
- Fig. 6: zeigt eine Vorderansicht einer Federgabel mit dem Unterbein von Fig. 1.
- Fig. 7: zeigt eine perspektivische Ansicht eines Unterbeins gemäß einer weiteren Ausführung der Erfindung von vorne oben links.
- Fig. 8: zeigt eine Seitenansicht des Unterbeins von Fig. 7.
- Fig. 9: zeigt eine perspektivische Ansicht des statischen Bauteils von Fig. 7.
- Fig. 10: zeigt eine perspektivische Ansicht des Unterbeins von Fig. 7 von hinten oben links.
- Fig. 11: zeigt eine Teilansicht eines Unterbeins gemäß Fig. 1 mit einer alternativen Versteifungseinrichtung.
- Fig. 12: zeigt eine Teilansicht eines Unterbeins gemäß Fig. 1 mit einer weiteren alternativen Versteifungs- einrichtung.
- Fig. 13: zeigt eine Teilansicht eines Unterbeins gemäß Fig. 1 mit einer weiteren alternativen Versteifungs- einrichtung.
- Fig. 14: zeigt eine Teilansicht eines Unterbeins gemäß Fig. 1 mit einer weiteren alternativen Versteifungs- einrichtung.
- Fig. 15: zeigt eine Teilansicht eines Unterbeins gemäß Fig. 1 mit einer weiteren alternativen Versteifungs- einrichtung.
- Fig. 16: zeigt eine Teilansicht eines Unterbeins gemäß Fig. 1 mit einer weiteren alternativen Versteifungs- einrichtung.

In der Beschreibung des Ausführungsbeispiels werden folgende Bezugszeichen verwendet:
- 1: Unterbein
- 2: Tauchrohr
- 3: Tauchrohr
- 4: Aufnahmeeinrichtung für Standrohr
- 5: Aufnahmeeinrichtung für Standrohr
- 6: vorderer Stabilisator
- 7: hinterer Stabilisator
- 8: Versteifungsglied
- 9: Versteifungsglied
- 10: Verstärkungsglied
- 11: Verstärkungsglied
- 12: Achsaufnahme (am Ausfallende des Tauchrohrs 2)
- 13: Achsaufnahme (am Ausfallende des Tauchrohrs 3)
- 14: Bremszangenaufnahme
- 15: Bremszangenaufnahme
- 16: Aufnahme für Verstelleinrichtung
- 17: Steckachse
- 18: Standrohr
- 19: Standrohr
- 20: Gabelbrücke
- 21: Schaftrohr (wird im Steuerrohr des Fahrradrahmens aufgenommen)
- 2091: Aussparung
- 2092: Aussparung
- 3091: Verbindungsdraht
- 4091: Verbindungsdraht
- 4092: Verbindungsdraht
- 4093: Versteifungsdraht
- 5091: Verbindungsbrücke
- 6091: Verbindungsbrücke
- 6092: Mittelsteg
- 6093: Aussparung
- 6094: Aussparung
- 7091: Verbindungsbrücke

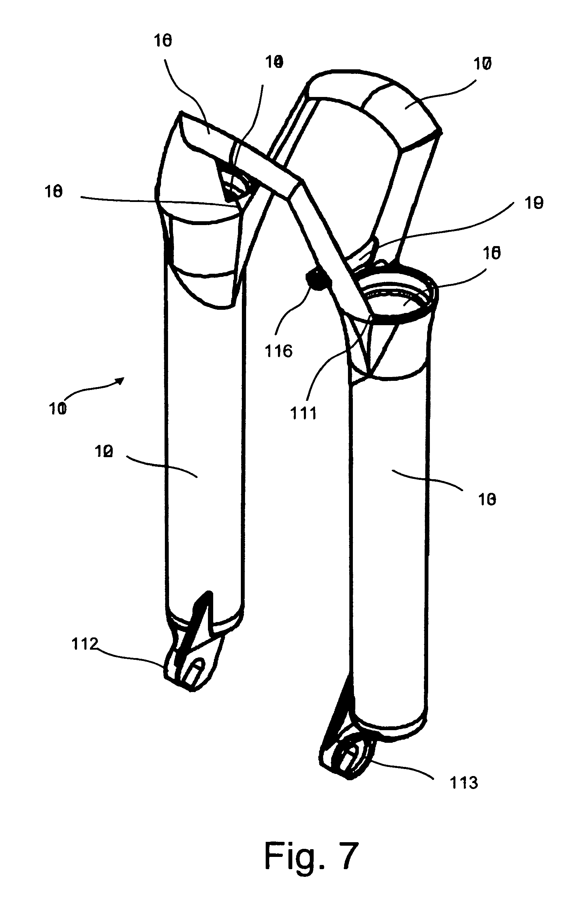

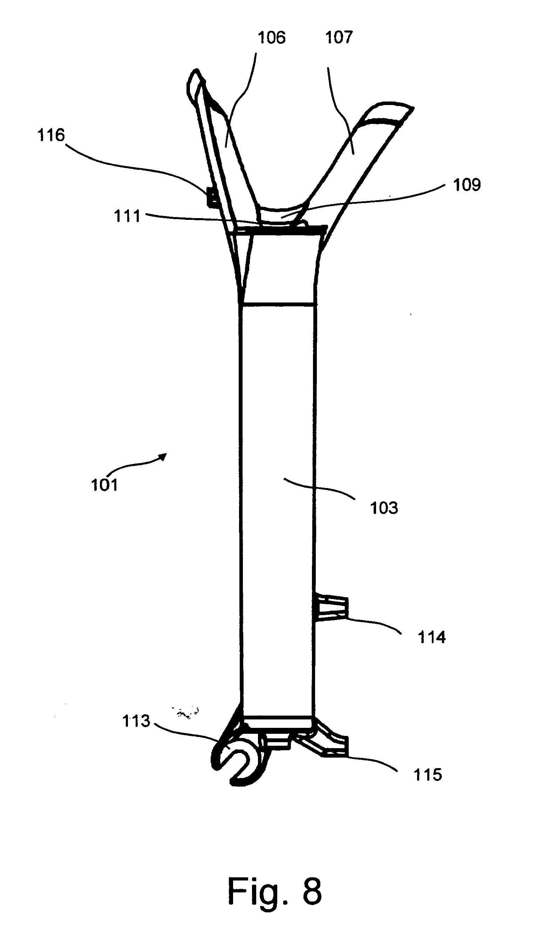

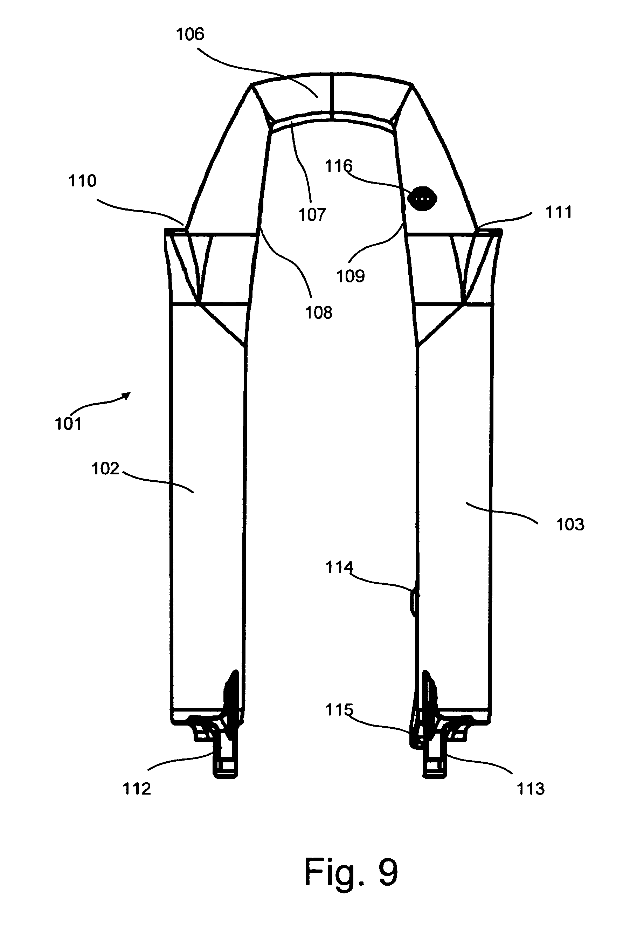

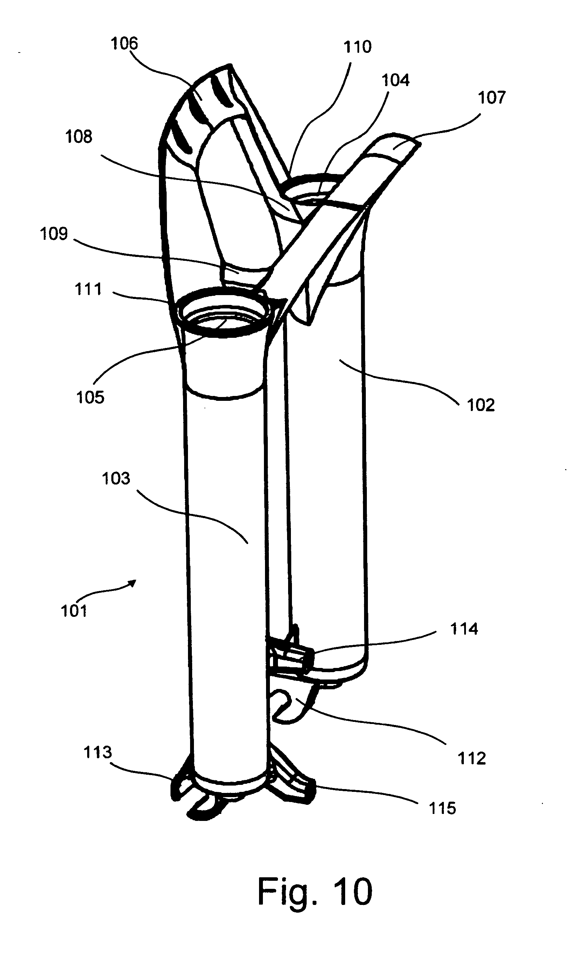

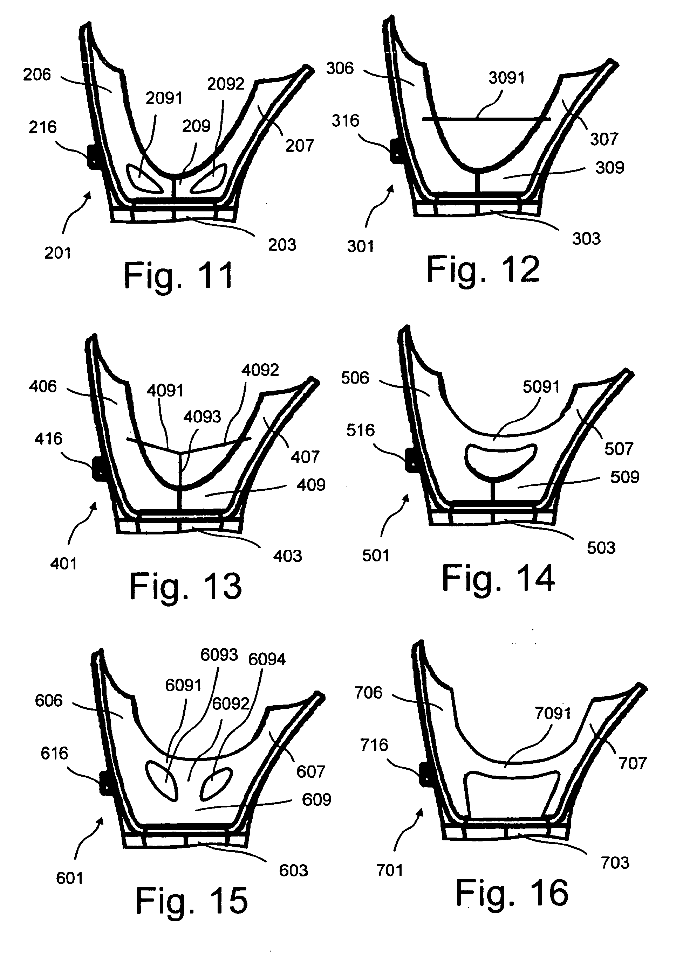

Bei den weiteren Ausführungsbeispielen bzw. Varianten werden für entsprechende Merkmale und Elemente, soweit nicht explizit aufgeführt, die gleichen aber um jeweils 100 (Figuren 7 bis 10), 200 (Figur 11), 300 (Figuren 12), 400 (Fig. 13), 500 (Fig. 14), 600 (Fig. 15) bzw. 700 (Fig. 16) erhöhte Bezugszeichen verwendet. Auf die Beschreibung der anderen Ausführungsbeispiele wird betreffend der nicht beschriebenen gemeinsamen Merkmale verwiesen.

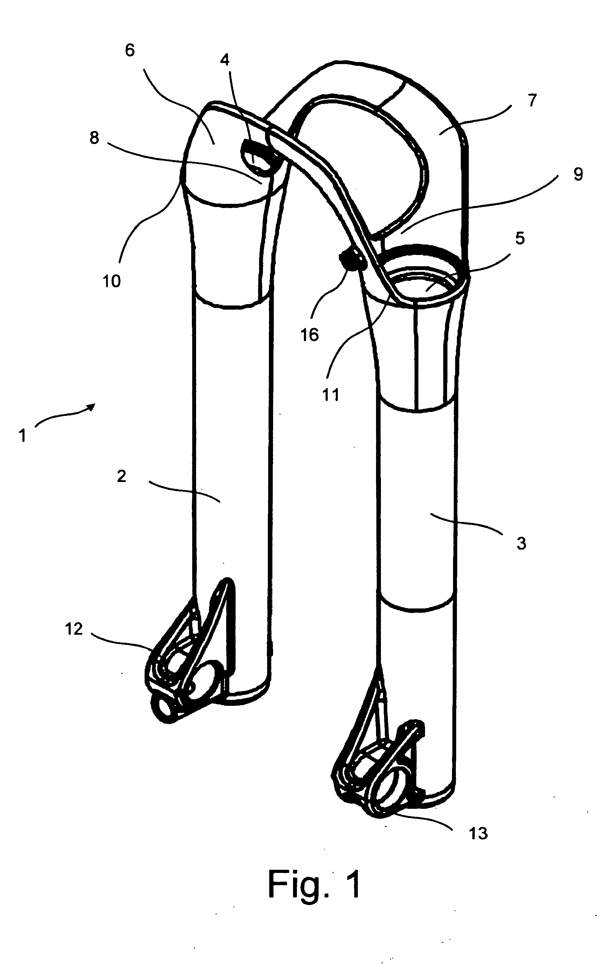

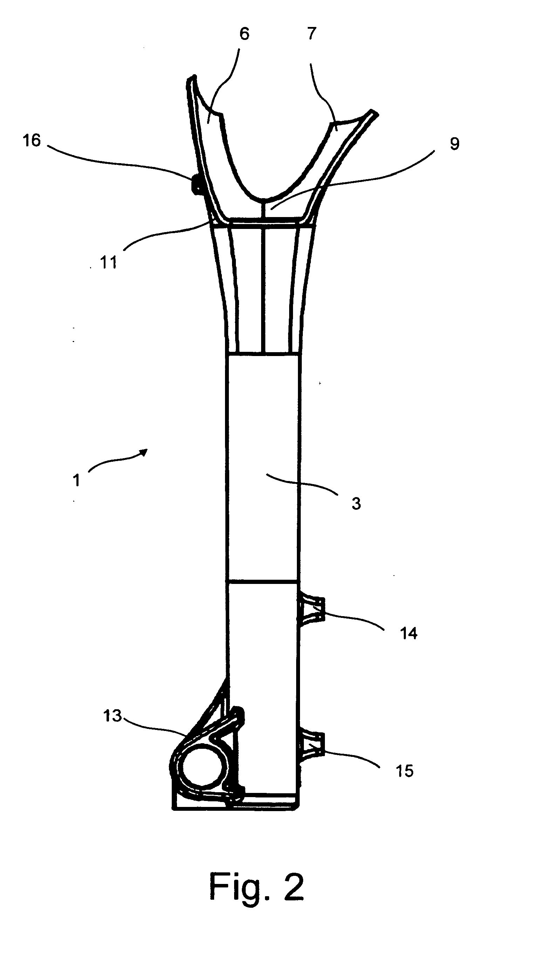

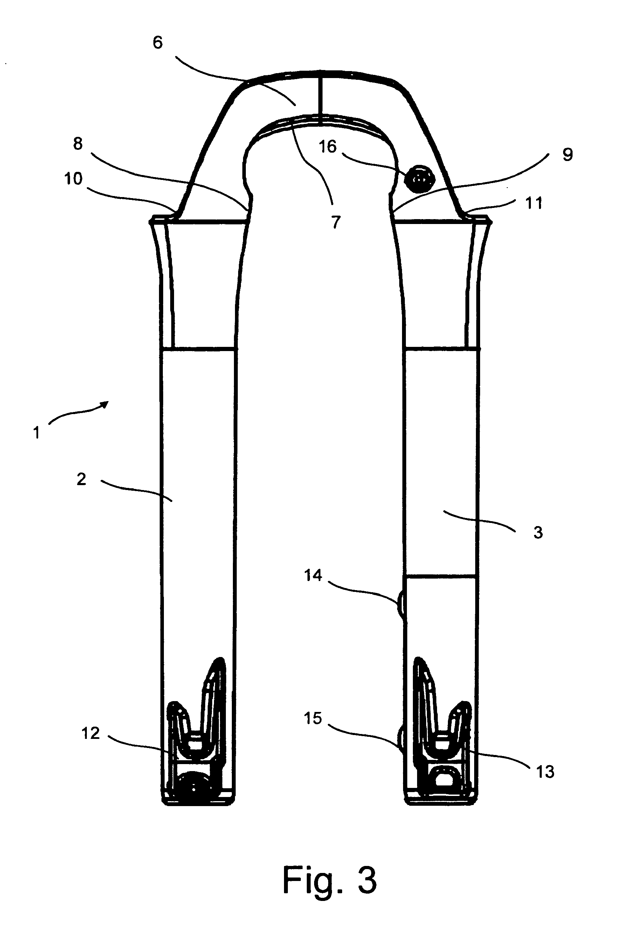

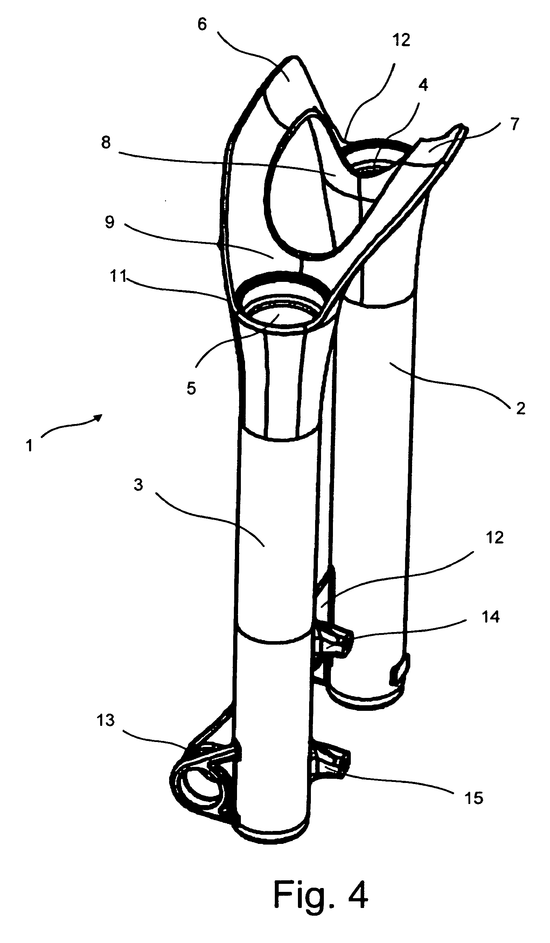

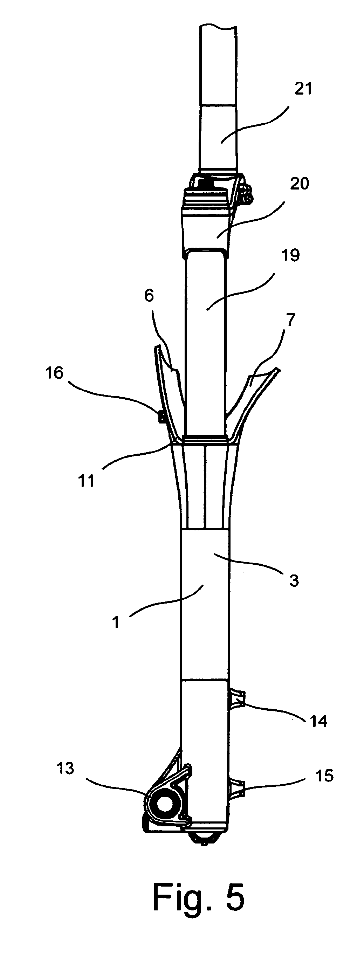

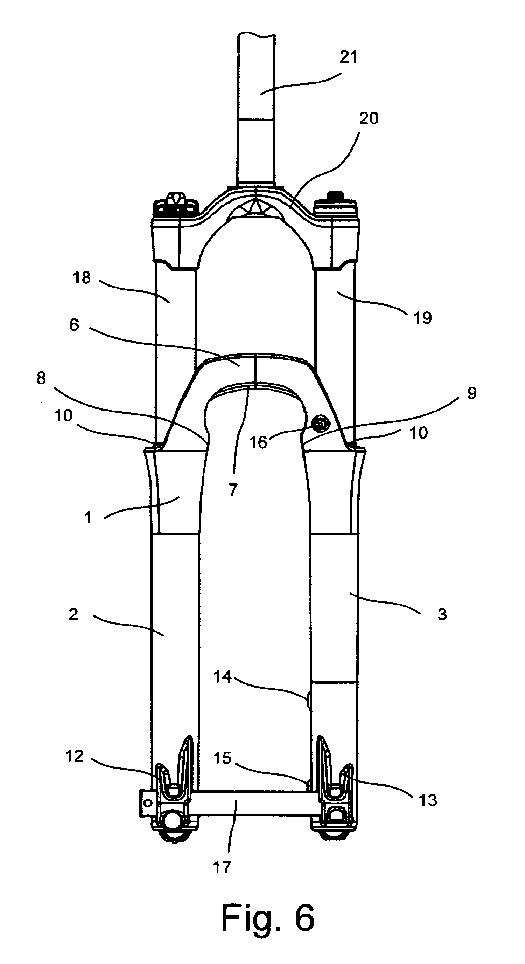

Die Figuren 1 bis 4 zeigen ein Unterbein 1 gemäß einer ersten Ausführung der Erfindung. Eine Federgabel mit einem derartigen Unterbein ist in den Figuren 5 und 6 gezeigt.

Das Unterbein 1 weist zwei Tauchrohre 2, 3 auf, die an ihren Ausfallenden jeweils eine Achsaufnahme 12, 13 zur Aufnahme der Steckachse 17 umfassen. An einem der beiden Tauchrohre sind Bremszangenaufnahmen 14, 15 vorgesehen, an denen eine Bremszange auf bekannte Weise angeordnet werden kann. Die Abmessungen sind vorzugsweise derart gewählt, dass eine Scheibenbremse mit einer Bremsscheibe, die 6 Zoll Durchmesser, 7 Zoll Durchmesser oder 8 Zoll Durchmesser aufweist, an den Bremszangenaufnahmen montiert werden kann.

An ihrem oberen Ende haben die Tauchrohre 2, 3 jeweils eine Aufnahmeeinrichtung 4, 5 zur verschiebbaren Aufnahme jeweils eines Standrohres 18, 19 der Federgabel. Die Standrohre sind auf bekannte Weise mittels einer Gabelbrücke 20 verbunden, an der ein Schaftrohr 21 befestigt ist. Das Schaftrohr 21 wird auf bekannte Weise in einem Steuerrohr eines Fahrradrahmens angeordnet.

Die beiden Tauchrohre 2, 3 sind durch einen vorderen Stabilisator 6 und einen hinteren Stabilisator 7 starr miteinander verbunden. Der vordere Stabilisator verläuft im Wesentlichen vor und der hintere Stabilisator verläuft im Wesentlichen hinter den beiden Tauchrohren 2, 3.

Die beiden Stabilisatoren 6, 7 sind über zwei Versteifungsglieder 8, 9 miteinander verbunden, die die erfindungsgemäße Versteifungseinrichtung ausmachen. Die beiden Versteifungsglieder 8, 9 verlaufen jeweils unmittelbar oberhalb der beiden Tauchrohre 2, 3 und sind auch damit fest verbunden. Sie weisen eine Höhe von 10 mm bis 15 mm und eine Breite bzw. Stärke von ungefähr 3 mm auf.

An den außen liegenden Ansatzpunkten der Stabilisatoren 6, 7 sind Verstärkungsglieder 10, 11 in Form einer Abrundung vorgesehen. Der Radius beträgt ungefähr 5 mm.

An dem vorderen Stabilisator 6 ist eine Aufnahmeeinrichtung 16 zur Aufnahme der Hydraulikleitung für die an dem Ausfallende anzuordnende Scheibenbremse vorgesehen.

Die Figuren 7 bis 10 zeigen ein Unterbein gemäß einer alternativen Ausführung der Erfindung. Bei dieser Ausführung der Erfindung weisen die Stabilisatoren 106, 107 eine eher eckige Form auf. An dem vorderen Stabilisator 106 sind außerdem Rippen vorgesehen. Derartige Rippen können auch an dem hinteren Stabilisator vorgesehen werden. Die Achsaufnahmen 112, 113 sind zur Aufnahme einer herkömmlichen Achse ausgebildet.

Bei der alternativen Ausführung gemäß Fig. 11 sind in dem Verbindungssteg 209 der Versteifungseinrichtung Aussparungen 2091, 2092 vorgesehen. Entsprechende Aussparungen sind an dem anderen Verbindungssteg vorgesehen.

Bei der alternativen Ausführung gemäß Fig. 12 weist die Versteifungseinrichtung zusätzlich zu den Verbindungsstegen 309 jeweils einen Verbindungsdraht 3091 auf.

Bei der alternativen Ausführung gemäß Fig. 13 weist die Versteifungseinrichtung zusätzlich zu den Verbindungsstegen 409 jeweils Verbindungsdrähte 4091, 4092 und 4093 auf, die wie ein Gitter verspannt sind.

Bei der alternativen Ausführung gemäß Fig. 14 weist die Versteifungseinrichtung zusätzlich zu den Verbindungsstegen 509 jeweils eine Verbindungsbrücke 5091 auf.

Bei der alternativen Ausführung gemäß Fig. 15 weist die Versteifungseinrichtung zusätzlich zu den Verbindungsstegen 609 jeweils eine Verbindungsbrücke 6091 auf, die über einen Mittelsteg 6092 mit dem Verbindungssteg 609 verbunden sind, derart dass Aussparungen 6093, 6094 gebildet werden. Die Aussparungen können durch eine dünne Fläche verschlossen sein.

Bei der alternativen Ausführung gemäß Fig. 16 weist die Versteifungseinrichtung anstatt des Verbindungsstegs eine Verbindungsbrücke 7091 auf, die auch als Verbindungssteg bezeichnet werden kann, der nicht mit dem Tauchrohr verbunden ist.

Die jeweils andere in den Figuren 11 bis 16 nicht abgebildete Seite ist vorzugsweise entsprechend ausgebildet.

Alle Ausführungen der Erfindung weisen vorzugsweise eine zur Radmittelebene symmetrisch ausgebildete Versteifungseinrichtung auf.

Alternative Ausführungen sind denkbar, insbesondere Kombination und/oder weitere Alternativen der in den Ausführungsbeispielen dargestellten und beschriebenen Ausführungen der Erfindung.

## Patentansprüche

1. Unterbein für eine Federgabel mit zwei Tauchrohren mit jeweils einer Aufnahmeeinrichtung zur Aufnahme eines in der Aufnahmeeinrichtung verschiebbar gelagerten Standrohrs und mit zwei Stabilisatoren, die den Ausfallenden der Tauchrohre gegenüberliegende Endbereiche der beiden Tauchrohre miteinander verbinden,
wobei das Unterbein eine Versteifungseinrichtung aufweist, die die beiden Stabilisatoren miteinander verbindet,
**dadurch gekennzeichnet, dass** die Versteifungseinrichtung ein oder mehrere Verbindungselemente aufweist, die die beiden Stabilisatoren oberhalb der Tauchrohre miteinander verbinden.

2. Unterbein nach Anspruch 1, **dadurch gekennzeichnet, dass** die Versteifungseinrichtung zumindest zwei Verbindungselemente aufweist, die jeweils ein Ende des einen Stabilisators mit einem Ende des anderen Stabilisators verbinden und bezogen auf das Unterbein innerhalb der Aufnahmeinrichtungen für die Standrohre verlaufen.

3. Unterbein nach einem der vorhergehenden Ansprüche, **dadurch gekennzeichnet, dass** die Verbindungselemente der Versteifungseinrichtung Stege und/oder Drähte umfassen.

4. Unterbein nach einem der vorhergehenden Ansprüche, **dadurch gekennzeichnet, dass** die Verbindungselemente der Versteifungseinrichtung Stege umfassen, die mit den beiden" Stabilisatoren und jeweils einem Tauchrohr verbunden sind.

5. Unterbein nach einem der vorhergehenden Ansprüche,
**dadurch gekennzeichnet, dass** die Verbindungselemente der Versteifungseinrichtung Stege umfassen, die eine kleinste Höhe von zumindest ungefähr 0,5 mm, vorzugsweise von zumindest mindestens ungefähr 1 mm, weiter vorzugsweise von zumindest ungefähr 2 mm, weiter vorzugsweise von zumindest ungefähr 3 mm, weiter vorzugsweise von zumindest ungefähr 5 mm und bevorzugt von ungefähr zumindest ungefähr 10 mm aufweisen, und/oder eine kleinste Höhe von weniger als ungefähr 50 mm, vorzugsweise von weniger als ungefähr 40 mm, weiter vorzugsweise von weniger als ungefähr 30 mm, weiter vorzugsweise von weniger als ungefähr 20 mm und bevorzugt von ungefähr weniger als ungefähr 15 mm aufweisen.

6. Unterbein nach einem der vorhergehenden Ansprüche,
**dadurch gekennzeichnet, dass** die Verbindungselemente der Versteifungseinrichtung Stege umfassen, die dünnere und dickere Bereiche umfassen, wobei die dickeren Bereiche vorzugsweise in Bereichen der Stege vorgesehen sind, in denen beim Fahren größere Spannungen bzw. Belastungen auftreten und die dünneren Bereiche vorzugsweise in Bereichen der Stege vorgesehen sind, in denen beim Fahren kleinere Spannungen bzw. Belastungen auftreten.

7. Unterbein nach einem der vorhergehenden Ansprüche,
**dadurch gekennzeichnet, dass** die Breite bzw. Stärke der Verbindungselemente der Versteifungseinrichtung und/oder die Breite bzw. Stärke der dickeren Bereiche der Verbindungselemente der Versteifungseinrichtung zumindest ungefähr 0,5 mm, vorzugsweise zumindest mindestens ungefähr 1 mm, weiter vorzugsweise zumindest ungefähr 2 mm, und bevorzugt ungefähr 3 mm beträgt, und/oder weniger als ungefähr 10 mm, vorzugsweise von weniger als ungefähr 8 mm, weiter vorzugsweise weniger als ungefähr 6 mm, weiter vorzugsweise weniger als ungefähr 5 mm, weiter vorzugsweise weniger als ungefähr 4 mm, und bevorzugt ungefähr 3 mm beträgt.

8. Unterbein nach einem der vorhergehenden Ansprüche,
**dadurch gekennzeichnet, dass** die Verbindungselemente der Versteifungseinrichtung Stege, die Aussparungen, Durchbrüche und/oder dünne flächige Bereiche sowie Rippen und/oder Streben umfassen, wobei die Rippen und/oder Streben vorzugsweise in Bereichen der Stege vorgesehen sind, in denen beim Fahren größere Spannungen bzw. Belastungen auftreten und die Aussparungen, Durchbrüche und/oder dünnen flächigen Bereiche vorzugsweise in Bereichen der Stege vorgesehen sind, in denen beim Fahren kleinere Spannungen bzw. Belastungen auftreten, und/oder Rippen umfassen, die vorzugsweise entlang der Ränder der Verbindungselemente verlaufen.

9. Unterbein nach einem der vorhergehenden Ansprüche,
**dadurch gekennzeichnet, dass** das Unterbein aus einem Druckgussmaterial und/oder einem Kunststoffmaterial ausgebildet ist, wobei das Druckgussmaterial vorzugsweise Aluminiumdruckguss- und/oder Magnesiumdruckgussmaterial umfasst, und wobei das Kunststoffmaterial faserverstärkten Kunststoff und/oder Carbon umfasst.

10. Unterbein nach dem vorhergehenden Anspruch, bei dem die Fasern des faserverstärkten Kunststoffes Kohlefasern, Glasfasern und/oder Kunststofffasern umfassen.

11. Unterbein nach einem der beiden vorhergehenden Ansprüche, bei dem die Richtung der Fasern im Wesentlichen unidirektional ist, wobei die Fasern vorzugsweise entlang der wirkenden Spannungen bzw. Kräfte ausgerichtet sind.

12. Unterbein nach einem der vorhergehenden Ansprüche,
**dadurch gekennzeichnet, dass** die Versteifungseinrichtung die beiden Stabilisatoren im Wesentlichen in der Mitte zwischen den beiden Tauchrohren und/oder im Wesentlichen an den seitlichen Enden der Stabilisatoren miteinander verbindet, und/oder die Stabilisatoren Verbindungsbrücken umfassen, die die Tauchrohre im Wesentlichen jeweils vor bzw: hinter den Aufnahmeeinrichtungen miteinander verbinden.

13. Unterbein nach einem der vorhergehenden Ansprüche,
**dadurch gekennzeichnet, dass** das Unterbein zumindest eine Aufnahmeeinrichtung zur Aufnahme einer Betätigungsleitung für einen Verstellmechanismus bzw. eine Bremsvorrichtung aufweist.

14. Unterbein nach dem vorhergehenden Anspruch, bei der die Aufnahmeinrichtung an der Versteifungseinrichtung und/oder an einem der Tauchrohre angeordnet ist.

15. Federgabel mit einem Unterbein nach einem der vorhergehenden Ansprüche.

## Claims

1. A lower leg for a suspension fork comprising two slider tubes each with a support device designed to receive a stanchion tube slidably mounted in the support device and comprising two stabilizers which connect end regions of both slider tubes lying opposite to the dropouts of the slider tubes, wherein the lower leg comprises a stiffening device which connects both stabilizers, **characterized in that** the stiffening device includes one or more connecting elements connecting both stabilizers above the slider tubes.

2. The lower leg according to claim 1, **characterized in that** the stiffening device comprises at least two connecting elements which each connect one end of one stabilizer with an end of the other stabilizer and which in relation to the lower leg run inside the support devices for the stanchion tubes.

3. The lower leg according to any of the previous claims, **characterized in that** the connecting elements of the stiffening device comprise crosspieces and/or wires.

4. The lower leg according to any of the previous claims, **characterized in that** the connecting elements of the stiffening device comprise crosspieces which are connected with the two stabilizers and one slider tube each.

5. The lower leg according to any of the previous claims, **characterized in that** the connecting elements of the stiffening device comprise crosspieces which feature a smallest height of at least about 0.5 mm, preferably of at least about 1 mm, more preferably of at least about 2 mm, more preferably of at least about 3 mm, more preferably of at least about 5 mm and preferably at least about 10 mm, and/or feature a smallest height of less than about 50 mm, preferably of less than about 40 mm, more preferably of less than about 30 mm, more preferably of less than about 20 mm and preferably of less than about 15 mm.

6. The lower leg according to any of the previous claims, **characterized in that** the connecting elements of the stiffening device comprise crosspieces which comprise thinner and thicker regions, wherein the thicker regions are preferably provided in regions of the crosspieces where higher stresses and loads occur while riding and the thinner regions are preferably provided in regions of the crosspieces where lower stresses and loads occur while riding.

7. The lower leg according to any of the previous claims, **characterized in that** the width and/or thickness of the connecting elements of the stiffening device and/or the width and/or thickness of the thicker regions of the connecting elements of the stiffening device is at least about 0.5 mm, preferably at least about 1 mm, more preferably at least about 2 mm and preferably about 3 mm, and/or less than about 10 mm, preferably less than about 8 mm, more preferably less than about 6 mm, more preferably less than about 5 mm, more preferably less than about 4 mm and preferably about 3 mm.

8. The lower leg according to any of the previous claims, **characterized in that** the connecting elements of the stiffening device comprise crosspieces, recesses, openings and/or thin planar regions as well as ribs and/or braces, wherein the ribs and/or braces are preferably provided in regions of the crosspieces where higher stresses and/or loads occur while riding, and the recesses, openings and/or thin planar regions are preferably provided in regions of the crosspieces where smaller stresses and/or loads occur while riding, and/or comprise ribs which preferably run along the edges of the connecting elements.

9. The lower leg according to any of the previous claims, **characterized in that** the lower leg is formed of a die-cast material and/or a synthetic material, wherein the die-cast material preferably comprises aluminum die-cast and/or magnesium die-cast material and wherein the synthetic material comprises fiber-reinforced plastics and/or carbon.

10. The lower leg according to any of the previous claims, wherein the fibers of the fiber-reinforced plastics comprise carbon fibers, glass fibers and/or synthetic fibers.

11. The lower leg according to one of the two previous claims, wherein the direction of the fibers is substantially unidirectional, the fibers being preferably aligned along the active stresses or forces.

12. The lower leg according to any of the previous claims, **characterized in that** the stiffening device connects the two stabilizers essentially in the middle between the two slider tubes and/or essentially at the lateral ends of the stabilizers, and/or the stabilizers comprise connecting bridges which each connect the slider tubes essentially in front of or behind the support devices.

13. The lower leg according to any of the previous claims, **characterized in that** the lower leg features at least one support device designed to receive an actuation cable for an adjustment mechanism or a brake mechanism.

14. The lower leg according to the previous claim, wherein the support device is attached to the stiffening device and/or to one of the slider tubes.

15. A suspension fork having a lower leg according to any of the previous claims.

## Revendications

1. Branche inférieure pour une fourche à suspension comprenant deux tubes plongeurs avec un chacun un système de réception pour la réception d'un tube vertical monté en translation dans le système de réception, et comprenant deux stabilisateurs, qui relient l'une à l'autre des zones terminales opposées des deux tubes plongeurs aux extrémités inférieures des tubes plongeurs,
dans laquelle la branche inférieure comprend un moyen de rigidification qui relie l'un à l'autre les deux stabilisateurs,
**caractérisée en ce que** le moyen de rigidification comprend un ou plusieurs éléments de liaison qui relient l'un à l'autre les deux stabilisateurs au-dessus des tubes plongeurs.

2. Branche inférieure selon la revendication 1, **caractérisée en ce que** le moyen de rigidification comprend au moins deux éléments de liaison, qui relient respectivement une extrémité d'un stabilisateur à extrémité de l'autre stabilisateur et qui s'étendent, par référence à la branche inférieure, à l'intérieur des systèmes de réception pour les tubes verticaux.

3. Branche inférieure selon l'une des revendications précédentes, **caractérisée en ce que** les éléments de liaison du moyen de rigidification comprennent des barrettes et/ou des fils.

4. Branche inférieure selon l'une des revendications précédentes, **caractérisée en ce que** les éléments de liaison du moyen de rigidification comprennent des barrettes qui sont reliées aux deux stabilisateurs et respectivement à un tube plongeur.

5. Branche inférieure selon l'une des revendications précédentes, **caractérisée en ce que** les éléments de liaison du moyen de rigidification comprennent des barrettes qui ont une hauteur minimum d'au moins environ 0,5 mm, de préférence au moins environ 1 mm, de façon encore plus préférée au moins environ 2 mm, de façon encore plus préférée au moins environ 3 mm, de façon encore plus préférée d'au moins environ 5 mm, et de préférence environ au moins 10 mm, et/ou une hauteur minimum inférieure à environ 50 mm, de préférence inférieure à environ 40 mm, de façon encore plus préférée au moins environ 30 mm, de façon encore plus préférée inférieure à environ 20 mm, et de préférence inférieure à environ 15 mm.

6. Branche inférieure selon l'une des revendications précédentes, **caractérisée en ce que** les éléments de liaison du moyen de rigidification comprennent des barrettes qui comportent des zones plus minces et des zones plus épaisses, telles que les zones plus épaisses sont prévues de préférence dans les régions des barrettes dans lesquelles en déplacement il se produit des contraintes ou des charges plus importantes, et les zones plus minces sont prévues de préférence dans les régions des barrettes dans lesquelles en déplacement il se produit des contraintes ou des charges plus faibles.

7. Branche inférieure selon l'une des revendications précédentes, **caractérisée en ce que** la largeur ou l'épaisseur des éléments de liaison du moyen de rigidification et/ou la largeur ou l'épaisseur des zones plus épaisses des éléments de liaison du moyen de rigidification s'élève de préférence à au moins environ 1 mm, de façon plus préférée au moins environ 2 mm, et de préférence environ 3 mm, et/ou est inférieure à environ 10 mm, de préférence inférieure à environ 8 mm, de façon encore plus préférée inférieure à environ 6 mm, de façon encore plus préférée inférieure à environ 5 mm, de façon encore plus préférée inférieure à environ 4 mm, et de préférence environ 3 mm.

8. Branche inférieure selon l'une des revendications précédentes, **caractérisée en ce que** les éléments de liaison du moyen de rigidification comprennent des barrettes, qui comportent des échancrures, des traversées et/ou des zones surfaciques minces, ainsi que des nervures et/ou des entretoises, telles que les nervures et/ou les entretoises sont prévues de préférence dans des régions des barrettes dans lesquelles en déplacement il se produit des contraintes ou des charges plus importantes, et les échancrures, les traversées et/ou les zones surfaciques minces sont prévues de préférence dans des régions des barrettes dans lesquelles en déplacement il se produit des contraintes ou des charges plus faibles, et/ou comprennent des nervures qui s'étendent de préférence le long des bordures des éléments de liaison.

9. Branche inférieure selon l'une des revendications précédentes, **caractérisée en ce que** la branche inférieure est réalisée en un matériau coulé sous pression et/ou en une matière plastique, tel que le matériau coulé sous pression comprend de préférence un matériau coulé sous pression à base d'aluminium et/ou à base de magnésium, et tel que la matière plastique comprend une matière plastique renforcée par des fibres et/ou du carbone.

10. Branche inférieure selon la revendication précédente, dans laquelle les fibres de la matière plastique renforcée par des fibres comprennent des fibres de carbone, des fibres de verre et/ou des fibres de matière plastique.

11. Branche inférieure selon l'une des deux revendications précédentes, dans laquelle la direction des fibres est sensiblement unidirectionnelle, telle que les fibres sont orientées de préférence le long des contraintes ou des forces en action.

12. Branche inférieure selon l'une des revendications précédentes, **caractérisée en ce que** le moyen de rigidification relie l'un à l'autre les deux stabilisateurs sensiblement au milieu entre les deux tubes plongeurs et/ou sensiblement au niveau des extrémités latérales des stabilisateurs, et/ou **en ce que** les stabilisateurs comprennent des pontets de liaison qui relient l'un à l'autre les tubes plongeurs sensiblement chacun devant ou derrière les systèmes de réception.

13. Branche inférieure selon l'une des revendications précédentes, **caractérisée en ce que** la branche inférieure comprend au moins un système de réception pour recevoir une ligne d'actionnement pour un mécanisme de réglage ou pour un dispositif de freinage.

14. Branche inférieure selon la revendication précédente, dans laquelle le système de réception est agencé sur le moyen de rigidification et/ou sur l'un des tubes plongeur.

15. Fourche à suspension comprenant une branche inférieure selon l'une des revendications précédentes.
